**Europäisches Patentamt**

**European Patent Office**

**Office européen des brevets**

(11) Veröffentlichungsnummer: **0 291 655**

**A1**

## (12) EUROPÄISCHE PATENTANMELDUNG

(21) Anmeldenummer: **88103932.5**

(22) Anmeldetag: **12.03.88**

(51) Int. Cl.⁴ **D03D 49/20 , F16D 43/26**

(30) Priorität: **19.05.87 CH 1920/87**

(43) Veröffentlichungstag der Anmeldung:
**23.11.88 Patentblatt 88/47**

(84) Benannte Vertragsstaaten:
**BE CH DE FR IT LI**

(71) Anmelder: **GEBRÜDER SULZER AKTIENGESELLSCHAFT**
**Zürcherstrasse 9**
**CH-8401 Winterthur(CH)**

(72) Erfinder: **Zollinger, Hans**
**Wilfrid-Heusser-Strasse 9**
**CH-8630 Tann-Rüti(CH)**

(74) Vertreter: **Dipl.-Ing. H. Marsch Dipl.-Ing. K. Sparing Dipl.-Phys.Dr. W.H. Röhl**
**Patentanwälte**
**Rethelstrasse 123**
**D-4000 Düsseldorf(DE)**

(54) **Warenschaltung für Textilmaschinen.**

(57) Die Warenschaltung mit einer von einem Steuersignal gesteuerten, einzelschussweise schaltbaren Warenschaltsperre weist einen auf einer Ausgangswelle (23) verschiebbar geführten Schiebekeil (20) mit einer Rückzugfeder (27) und einer in beiden Drehrichtungen formschlüssig dem Schiebekeil angepassten Schaltnut (10) in einer Eingangswelle (13) auf, sowie ein durch ein Steuersignal (90, 91) unbelastet schaltbares Riegelelement (50). Dieses Riegelelement verriegelt bzw. entriegelt einen Ausrückhebel (30), welcher durch ein Antriebselement (60) angetrieben, den Schiebekeil betätigt. Ein Schlagreduktionselement kann z.B. ein Verzögerungsgetriebe oder eine elastische Dämpfungseinlage sein. Eine beim Ausrücken des Schiebekeils auf die Ausgangswelle wirkende Bremse (40) weist eine Positionierungsstelle auf. Sowohl als Stellglieder, wie auch als Antriebselement können frei ansteuerbare Elektromagnete eingesetzt werden. Dies ermöglicht ein genau definiertes, sicheres Schalten bzw. Sperren der Warenschaltung in beliebig wählbarem Rhythmus bei sehr hohen Drehzahlen.

FIG. 2

## Warenschaltung für Textilmaschinen

Die Erfindung betrifft eine Warenschaltung für Textilmaschinen mit einer von einem Steuersignal gesteuerten Warenschaltsperre, welche einzelschussweise schaltbar ist, mit einer Eingangs- und einer Ausgangswelle. Bei Webmaschinen wird das fertige Gewebe mittels einer Warenschaltung auf den Tuchbaum aufgewickelt, wobei ein auf das Gewebe abgestimmter, fest eingestellter Vorschub eingehalten werden soll. Hohe Gewebequalität erfordert dabei einen genau definierten, kontinuierlichen Vorschub.

Um nun ein beliebiges Verdichtungsmuster erzielen zu können, muss dieser Warenabzug im gewünschten, frei wählbaren Rhythmus unterbrochen oder verzögert werden können. Solche unterschiedlichen Gewebeverdichtungen können in sehr beschränktem Ausmasse mittels umschaltbarer Klinkenradsätze, z.B. gemäss US-PS 3 837 368 erzielt werden. Hier sind mehrere Klinkenradsätze mit unterschiedlichen Zähnezahlen vorgesehen, welche abwechselnd als Uebertragungsgetriebe der Warenschaltung eingeschaltet werden können. Da aber nur einige wenige Klinkenradsätze, (z.B. vier) in einer Webmaschine Platz finden, ist damit auch nur eine sehr beschränkte Anzahl von unterschiedlichen Gewebeverdichtungen bzw. Vorschubgeschwindigkeiten erreichbar. Bei jedem Schuss wird das Klinkenrad und damit der Warenabzug um einen Zahn weitergedreht. Durch eine zusätzliche Vorrichtung kann dieser langsamlaufende Vorschub auch unterbrochen und die Warenschaltung damit gesperrt werden. Dieses relativ einfache Prinzip der langsamlaufenden Klinkenräder ist wohl einzelschussweise exakt schaltbar, es kann jedoch die weiteren Anforderungen in leistungsfähigeren Webmaschinen und für Gewebe höherer Qualität nicht erfüllen:

- kontinuierlicher Vorschub
- zwangsläufig rückschaltbar durch den Maschinenantrieb.

Rücklauf durch den Gewebezug, welcher sehr stark vom Gewebe abhängt, genügt nicht. Rückschaltung um eine genau definierte Anzahl von Schritten ist nur zwangsläufig möglich. Um diese Anforderungen erfüllen zu können, wurden Warenschaltungen entwickelt mit wechselbaren Zahnraduntersetzungen und vor allem mit einer Warenschaltsperre, welche mit Maschinengeschwindigkeit dreht (ein Umgang pro Schuss) und daher sehr präzise geschaltet werden kann. Der Schaltmechanismus wird dabei von einer Klinke auf einer Ausgangswelle wahrgenommen, welche in eine mit der Eingangswelle verbundene Vertiefung einer Scheibe einrückt bzw. ausrückt. Auch diese verbesserte Warenschaltung kann aber den steigenden Anforderungen bei schnellen Maschinen nicht mehr genügen. Es treten starke Abnützungen und Brüche der beanspruchten Teile infolge der harten Schläge auf. Ueber ca. 350 Umdrehungen pro Minute ist auch die Schaltfunktion generell in Frage gestellt. Ein zusätzliches grosses Problem liegt in der beschränkten Kraft des mechanischen Steuersignals, mit welchem die Warenschaltung bzw. die Warenschaltsperre geschaltet werden muss. Bei Jacquardmaschinen z.B. reicht diese Kraft dann oft nicht mehr aus zum Schalten.

Aufgabe der Erfindung ist es nun, obige Probleme zu überwinden und eine Warenschaltung mit frei wählbarem Rhythmus der Warenschaltsperre für beliebige Gewebeverdichtungen zu schaffen, welche auch bei sehr hohen Drehzahlen sicher und präzise arbeitet, und welche zudem auch mit frei programmierbaren elektrischen Signalen geschaltet werden kann.

Diese Aufgabe wird mit der vorliegenden Erfindung gelöst, durch einen auf der Ausgangswelle verschiebbar geführten Schiebekeil mit einer Rückzugfeder und einer in beiden Drehrichtungen formschlüssig dem Schiebekeil angepassten Schaltnut in der Eingangswelle, sowie durch ein durch das Steuersignal unbelastet schaltbares Riegelelement, welches einen Ausrückhebel verriegelt bzw. wieder freigibt, wobei dieser Ausrückhebel durch ein Antriebselement bewegt wird und den Schiebekeil betätigt, sowie durch ein Schlagreduktionselement.

Damit wird die notwendige Schaltpräzision durch die einander angepassten Schaltelemente Schiebekeil und Schaltnut erreicht, und das unbelastet schaltbare Riegelelement erlaubt es, Signale geringer Energie zur Schaltung zu verwenden, seien dies mechanische Signale der Jacquardzüge oder auch eine beliebige Folge elektrischer Signale. Die notwendige Schaltenergie wird durch das Antriebselement geliefert und die auftretende hohe Schlagenergie beim Wiedereinrücken der Warenschaltung wird zu einem wesentlichen und funktionsentscheidenden Teil vom Schlagreduktionselement aufgefangen bzw. reduziert.

Wie in den Unteransprüchen beschrieben, können vorteilhafte Ausgestaltungen der Erfindung auch die folgenden Merkmale aufweisen: das Schlagreduktionselement kann durch ein Verzögerungsgetriebe gebildet werden, mit einer Drehzahlredukton von vorzugsweise 30 % bis 40 %, welches der Engangswelle vorgeschaltet ist. Dies erlaubt im Prinzip eine entsprechende Erhöhung der Maschinendrehzahl. Der gleiche Effekt kann aber auch mit einer elastischen Dämpfungseinlage erreicht werden, welche zwischen Schiebekeil und Ausgangswelle angeordnet ist. Elastische Polyurethane mit einer Shore A-Härte von 90 bis 100 können sich als solche Dämpfungseinlagen besonders eignen.

Als sicheres und robustes Antriebselement kann mit Vorteil eine Kurvenscheibe und ein Rollenhebel vorgesehen sein. Es ist hier aber auch möglich, einen frei ansteuerbaren Elektromagneten einzusetzen, da die notwendige zeitliche Präzision der Warenschaltsperre durch die mechanischen Elemente gewährleistet wird. Wenn jedoch z.B. eine Elektromagnet-Kupplung direkt als Warenschaltelement eingesetzt würde, so könnte damit keine präzise Schaltung erreicht werden, was sich sichtbar ungünstig auf Qualität und Gleichmässigkeit des Gewebes auswirkte. Im Prinzip kann mit der Erfindung die Präzision der mechanischen formschlüssigen Zwangsschaltung mit den vielfältigen Steuerungsmöglichkeiten elektronischer Signale kombiniert werden. Dies kann auch dadurch erreicht werden, dass das Riegelelement durch einen frei ansteuerbaren Elektromagneten als Stellglied eines elektrischen Steuersignalgebers betätigt wird.

Durch drehrichtungsabhängige Ausbildung von Schiebekeil und Schaltnut, wobei deren Kontaktfläche in Vorwärtsrichtung mehrfach grösser ist als deren Kontaktfläche in Rückwärtsrichtung, z.B. 3 bis 5 mal grösser, kann eine hohe Betriebssicherheit und Lebensdauer beim Wiedereinschalten in Vorwärtsrichtung erreicht werden. Die kleinere Kontaktfläche in Rückwärtsrichtung genügt erstens zum Schalten und lässt zweitens zusätzlichen Raum frei für ein optimales Einrücken des Schiebekeils bei sehr hohen Drehzahlen. Durch eine einstellbare, auf die Ausgangswelle wirkende Bremse mit einer Positionierungsstelle für den Schiebekeil kann die Betriebssicherheit weiter erhöht werden.

Im folgenden wird die Erfindung anhand von Ausführungsbeispielen im Zusammenhang mit den Zeichnungen näher erläutert. Es zeigt:

Fig. 1 eine bisherige Ausführung einer Warenschaltsperre;

Fig. 2 eine Ausführung der erfindungsgemässen Vorrichtung mit Kurvenscheibe und eingerücktem Schiebekeil;

Fig. 2a einen elektrischen Signalgeber mit Stellglied;

Fig. 2b einen Ausschnitt von Fig. 2 mit ausgerücktem Schiebekeil;

Fig. 3a, b ein Verzögerungsgetriebe als Schlagreduktionselement;

Fig. 4 einen Schiebekeil mit elastischer Dämpfungseinlage als Schlagreduktionselement.

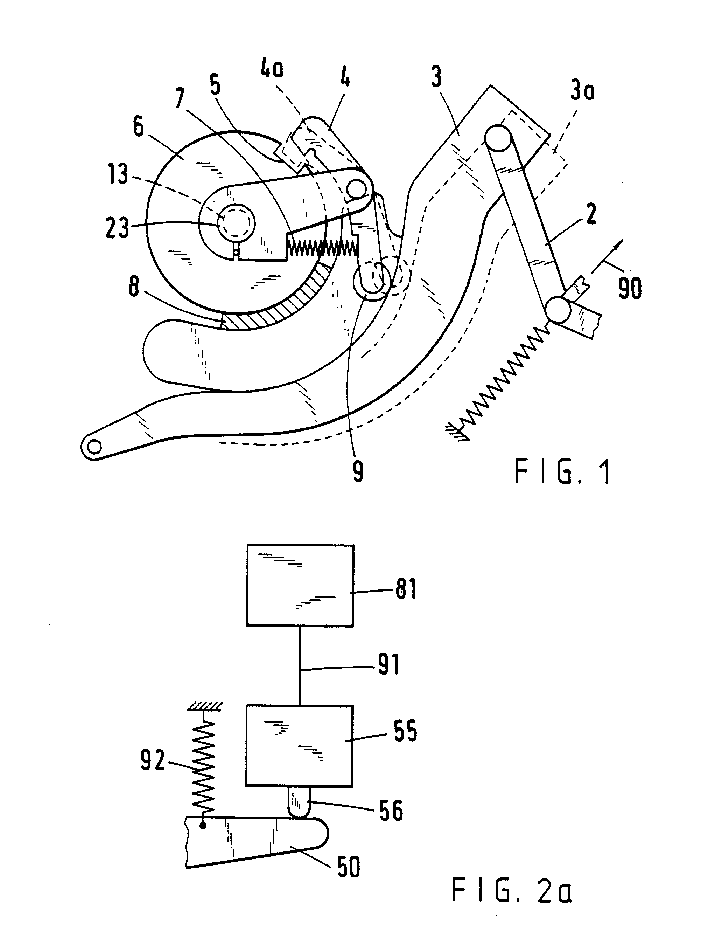

Fig. 1 zeigt eine Warenschaltsperre bekannter Art mit einer Eingangswelle 13, welche mit einer Scheibe 6 und einer Ausgangswelle 23, welche mit einer drehbar gelagerten Klinke 4 verbunden ist.

Eine Druckfeder 7 drückt die Klinke 4 gegen eine Vertiefung 5 am Umfang der Scheibe 6. Im eingeschalteten Zustande 4a wird also die Scheibe 6 durch die Klinke 4 mitgenommen. Die Eingangswelle 13 ist dann fest mit der Ausgangswelle 23 verbunden, welche z.B. über ein Kettengetriebe das nicht gezeichnete Warenschaltgetriebe antreibt. Am Ende der Klinke 4 ist eine Rolle 9 gelagert, welche im eingeschalteten Zustand mit der Klinke frei umlaufen kann.

Wird nun z.B. von einer Schaftmaschine ein mechanisches Steuersignal 90 bzw. eine Kraft auf ein Gestänge 2 ausgeübt, so wird ein damit verbundener Kurvenhebel von der Stellung 3a "eingeschaltet" nach der Stellung 3 "ausgeschaltet" bewegt. Die Rolle 9 läuft beim nächsten Umgang auf die Kurve des Hebels 3 auf und verdreht die Klinke von Stellung 4a in die Stellung 4, wodurch sie aus der Vertiefung 5 ausrückt. Eine auf dem Kurvenhebel 3 angebrachte, gefederte Bremse 8 berührt nun die Scheibe und bringt sie rasch zum Stehen, so dass der Warenabzug unterbrochen wird. Beim Zurückführen des Kurvenhebels 3 nach Position 3a "eingeschaltet", schnappt die Klinkennase in voller Umfangsgeschwindigkeit wieder in die Vertiefung 5 der Scheibe 6 ein und nimmt diese schlagartig mit. Durch den harten Schlag werden Klinkennase und Vertiefung 5 der Scheibe schon beim mittleren Drehzahlen rasch abgenützt, wodurch die exakte Mitnahme nicht mehr gewährleistet ist. Es kommt dabei auch vor, dass die Feder 7 bricht. Bei höheren Drehzahlen der Webmaschine, ab ca. 350 Touren, kann diese Vorrichtung die Sperrfunktion nicht mehr erfüllen.

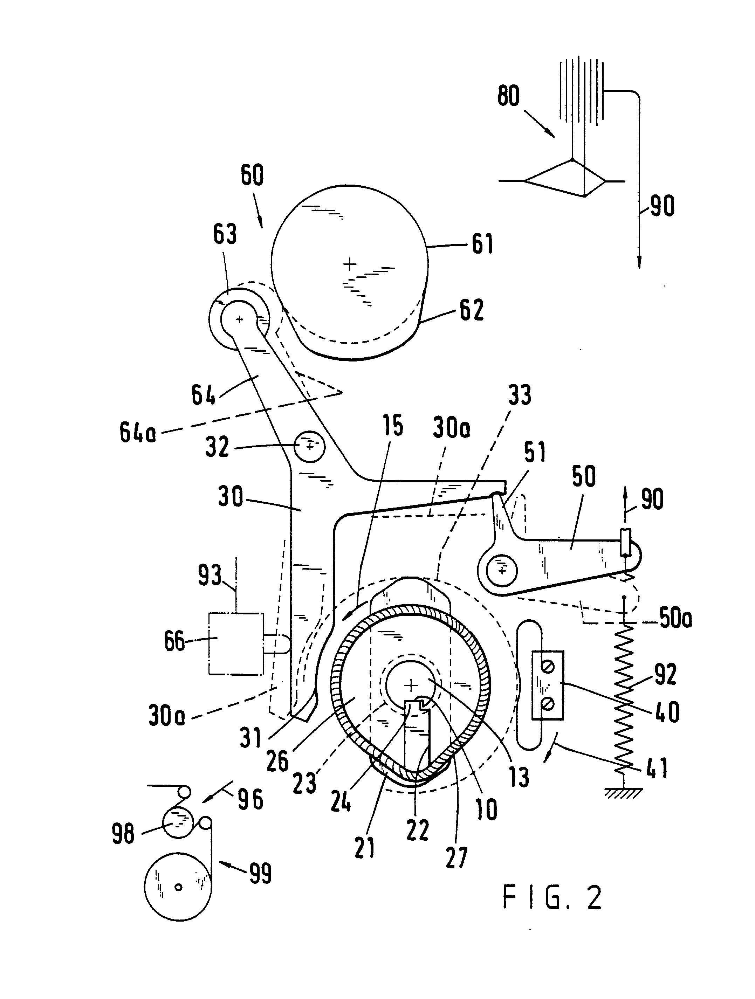

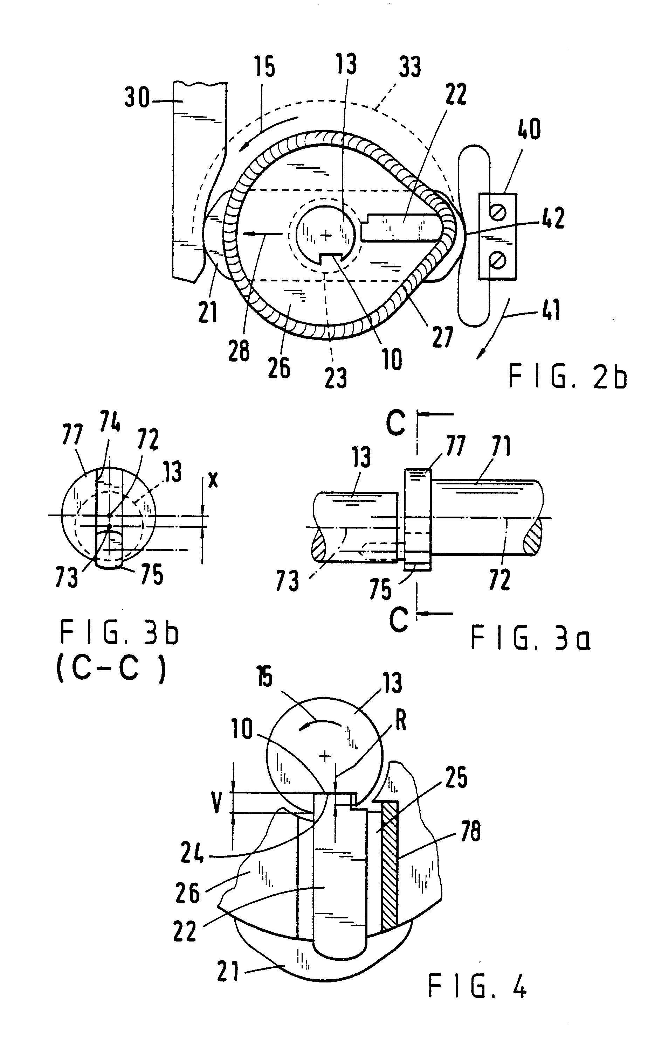

Fig. 2 zeigt eine Ausführung der erfindungsgemässen Vorrichtung in einer Webmaschine. Ausgehend von einer Fachbildevorrichtung 80 wird ein Steuersignal in eine Warenschaltsperre (10 bis 60) geführt. Das Signal kann sowohl ein mechanisches Steuersignal 90, z.B. von einer nicht gezeichneten Kartenschaftmaschine oder von einer Jacquardmaschine sein, als auch ein elektrisches Steuersignal 91 von einer mit der Fachbildung koordinierten Programmsteuerung 81 (Fig. 2a). Mechanische und elektrische Leistungsantriebe (von Maschinenantrieb und Netz) werden von der Schaltsperre gemäss Steuersignal 90, 91 in einen geschalteten Abtrieb 96 umgesteuert. Der Abtrieb 96 treibt eine Einziehwalze 98 (auch Schaltbaum genannt) einer Gewebeaufnahme 99 an.

In der erfindungsgemässen Vorrichtung kann bei jedem einzelnen Webschuss durch das Steuersignal 90, 91 festgelegt werden, ob die Warenschaltung um den durch ein nicht gezeichnetes Untersetzungsgetriebe festgelegten Schritt, welcher genau 360° Drehung der Hauptwelle entspricht, weitergeschaltet werden soll oder nicht (vollständige Sperrung, Drehung 0°). Diese präzise, z.B. vom Gewebezug unabhängige Warenschaltung, wird durch die formschlüssigen mechanischen Elemente erreicht: Eine Schaltnut 10 dreht mit der Eingangswelle 13, mit welcher sie fest verbunden ist. Ein Schiebekeil 21, 22 ist auf der Ausgangswelle 23 verschiebbar geführt. Schiebekeil und Schaltnut entsprechen einander für beide Drehrichtungen formschlüssig. Der Schiebekeil wird durch einen von einem Antriebselement 60 bewegten Ausrückhebel 30 betätigt, d.h. in die Schaltnut eingerückt bzw. ausgerückt. Ein durch das Steuersignal 90, 91 unbelastet schaltbares Riegelelement, hier in Form eines Unterstellhebels 50, verriegelt den Ausrückhebel 30 bzw. gibt ihn wieder frei.

Ein in Fig. 3 und 4 dargestelltes Schlagreduktionselement reduziert die auftretende Belastung durch den Schaltschlag beim Einrücken des Schiebekeils wesentlich, z.B. um 30 % bis 50 %. Beim Ausrücken des Schiebekeils sorgt ene Bremse 40 für rasches und genau reproduzierbares Stillstehen der Ausgangswelle 23 und damit des Gewebevorschubs an der Einziehwalze 98.

Dank unbelastet schaltbarem Riegelelement bzw. Unterstellhebel 50 können auch elektrische und mechanische Signale sehr geringer Kräfte zur prinzipiell beliebigen Steuerung der Warenschaltung eingesetzt werden.

Im Einzelnen beschrieben ergibt sich folgende Funktion der Ausführung mit Kurvenscheibe nach Fig. 2 und 2b: Das mechanische Schaltsignal 90, z.B. in Form eines Zugs einer Kartenschaftmaschine, ergänzt durch eine Rückzugfeder 92, betätigt einen Unterstellhebel 50 als Riegelelement in die beiden Stellungen "ein" und "aus" (ausgerückt, ausgeschaltet). Im ausgeschalteten Zustand 50 sperrt eine Spitze 51 des Unterstellhebels den Ausrückhebel 30 mit einer Auflaufkurve 31, welche somit in der ausgerückten Stellung fixiert sind. Ein Schiebekeil, bestehend aus miteinander verbundenen Schieber 21 und Schaltkeil 22, dreht mit der Ausgangswelle 23 in Vorwärts-Drehrichtung 15 mit, bis ein Ende des Schiebers 21 auf die Auflaufkurve 31 auftrifft und dadurch der Schaltkeil 22 aus einer Schaltnut 10 der Eingangswelle 13 ausgerückt wird. Das andere, der Auflaufkurve 31 gegenüberliegende Ende des Schiebers 21 wird dabei gegen die feststehende Bremse 40 gedrückt und rasch zum Stehen gebracht. Die Bremse ist in Pfeilrichtung 41 verstellbar, so dass das Schieberende an einer Positionierungsstelle 42 definiert und reproduzierbar zum Stehen gebracht werden kann. Die Eingangswelle dreht nun frei weiter, während die Bewegung der Ausgangswelle 23 und damit der Warenvorschub unterbrochen bleiben, bis der Ausrückhebel 30 mit Auflaufkurve 31 in die Stellung 30a "eingeschaltet" versetzt wird. Dann schiebt eine, um eine Scheibe 26 gelegte, endlose Rückzugfeder 27 den Schiebekeil 21, 22 in Pfeilrichtung 28 wieder zurück, bis der Schaltkeil 22 beim nächsten Umgang wieder vollständig in die mit der Eingangswelle 13 verbundene Schaltnut 10 einrastet. In diesem eingeschalteten Zustand, ist der Unterstellhebel in Stellung 50a, der Ausrückhebel ist entsperrt (30a) und wird durch eine Nockenscheibe 61 über einen Rollenhebel 64, 64a mit einer Rolle 63 angetrieben. Die mit der Eingangswelle synchron laufende Nockenscheibe bewegt nun den Ausrückhebel 30 um eine Drehachse 32 und durch einen Nocken 62 gesteuert so, dass die Auflaufkurve 31 den Schieberenden beim Vorbeilaufen immer ausweicht (Pos. 64a, 30a). Das äussere Schieberende läuft dabei auf einem Begrenzungskreis 33 um, welcher die Bremse 40 gerade nicht berührt.

Anstelle des mechanischen Signals, bzw. Zugs 90 kann auch ein elektrisches Steuersignal 91 mittels eines relativ kleinen Elektromagneten 55 als Stellglied über dessen bewegten Teil 56 zur Schaltung des Unterstellhebels 50 eingesetzt werden (Fig. 2a). Schaltkräfte von z.B. nur 5 bis 10 N reichen völlig aus. Ebenso kann auch an Stelle der Nockenscheibe 61 ein Elektromagnet 66 als Antriebselement für den Ausrückhebel 30 Anwendung finden, wobei dessen elektrische Leistungsspeisung 93 ebenfalls durch das elektrische Signal 91 gesteuert wird (strich-punktiert angedeutet in Fig. 2).

Fig. 3a, 3b zeigen als Schlagreduktionselement ein der Eingangswelle 13 vorgeschaltetes Verzögerungsgetriebe, welches von einer Antriebswelle 71 der Webmaschine kontinuierlich angetrieben wird. Die Antriebswelle 71 trägt einen Zapfen 77 mit einer Nut 74, in welche ein kurbelzapfenähnliches Gleitstück 75 der Eingangswelle 13 eingreift. Die Achsen 72 und 73 von Antriebswelle 71 und Eingangswelle 13 (welche der Abtriebswelle des Verzögerungsgetriebes entspricht) sind um einen Abstand X exzentrisch versetzt. Das Gleitstück 75 und damit die Eingangswelle 13 führen dadurch zwangsläufig eine sinusförmig schwingende Drehbewegung aus. Mit der Exzentrizität X kann der Grad der Ungleichförmigkeit gewählt werden. Vorzugsweise wird damit eine Drehzahlreduktion von 30 bis 40 % im tiefsten Punkt des Drehzahlverhaltens gegenüber der konstanten Webmaschinendrehzahl eingestellt. Das Einrücken des Schaltkeils 22 in die Schaltnut 10 (Fig. 2) wird dann in diesen tiefsten Punkt verlegt.

Eine andere vorteilhafte Ausführung des Schlagreduktionselementes zeigt Fig. 4 in Form einer elastischen Dämpfungseinlage 78, welche den auf den Schaltkeil 22 ausgeübten Schlag beim Wiedereinrücken in die Schaltnut 10 abfängt. Unter einem Gleitlager 25 zur Führung des Schaltkeils 22 ist die Dämpfungseinlage 78 angeordnet. Sie besteht vorzugsweise aus form- und alterungsbeständigen Elastomeren, wie beispielsweise aus Polyurethanen mit einer Shore A-Härte von 90 bis 100.

Durch aufeinander abgestimmte drehrichtungsabhängige Ausbildung von Schaltnut 10 und einer Nase 24 des Schaltkeils 22 (Fig. 4), kann die Kontaktflächenbelastung beim Wiedereinschalten auch noch bei sehr hohen Drehzahlen möglichst tief gehalten werden. Dazu ist die Kontaktfläche in Vorwärtsrichtung (Höhe V) mehrfach grösser gewählt, als die Kontaktfläche in Rückwärtsrichtung (Höhe R), beispielsweise 3 bis 5 mal höher. Dank der geringen Höhe R, kann dann der Schaltkeil bei normaler Vorwärtsschaltung (in Pfeilrichtung 15) über einen entsprechend vergrösserten Drehbereich der Eingangswelle einrücken, d.h. es steht dafür mehr Zeit zur Verfügung, was bei hohen Drehzahlen unabdingbar ist. Beim langsamen Rückwärtsschalten andererseits genügen die kleinere Kontaktfläche(R) und der verkürzte zur Verfügung stehende Drehbereich.

## Ansprüche

1. Warenschaltung für Textilmaschinen mit einer von einem Steuersignal gesteuerten Warenschaltsperre, welche einzelschussweise schaltbar ist, mit einer Eingangs- und einer Ausgangswelle, **gekennzeichnet** durch einen auf der Ausgangswelle (23) verschiebbar geführten Schiebekeil (21, 22) mit einer Rückzugfeder (27) und einer in beiden Drehrichtungen formschlüssig dem Schiebekeil angepassten Schaltnut (10) in der Eingangswelle (13), sowie durch ein durch das Steuersignal (90, 91) unbelastet schaltbares Riegelelement (50), welches einen Ausrückhebel (30) verriegelt bzw. wieder freigibt, wobei der Ausrückhebel durch ein Antriebselement (60) bewegt wird und den Schiebekeil betätigt, sowie durch ein Schlagreduktionselement.

2. Warenschaltung nach Anspruch 1, dadurch gekennzeichnet, dass als Antriebselement eine Kurvenscheibe (61) und ein Rollenhebel (64) vorgesehen sind.

3. Warenschaltung nach Anspruch 1, dadurch gekennzeichnet, dass als Antriebselement ein frei ansteuerbarer Elektromagnet (66) vorgesehen ist.

4. Warenschaltung nach Anspruch 1, dadurch gekennzeichnet, dass als Schlagreduktionselement ein Verzögerungsgetriebe (75) mit einer Drehzahlreduktion von vorzugsweise 30 % bis 40 % vorgesehen ist, welches der Eingangswelle (13) vorgeschaltet ist.

5. Warenschaltung nach Anspruch 1, dadurch gekennzeichnet, dass als Schlagreduktionselement eine elastische Dämpfungseinlage (78) vorgesehen ist, welche zwischen Schiebekeil und Ausgangswelle angeordnet ist.

6. Warenschaltung nach Anspruch 5, dadurch gekennzeichnet, dass die Dämpfungseinlage (78) aus elastischem Polyurethan mit einer Shore A-Härte von 90 bis 100 besteht.

7. Warenschaltung nach Anspruch 1, dadurch gekennzeichnet, dass das Riegelelement (50) durch einen frei ansteuerbaren Elektromagneten (55) als Stellglied eines elektrischen Steuersignalgebers betätigt wird.

8. Warenschaltung nach Anspruch 1, dadurch gekennzeichnet, dass die Kontaktfläche zwischen Schiebekeil (21, 22) und Schaltnut (10) in Vorwärtsrichtung (V) mehrfach grösser ist als deren Kontaktfläche in Rückwärtsrichtung (R), vorzugsweise 3 bis 5 mal grösser.

9. Warenschaltung nach Anspruch 1, dadurch gekennzeichnet, dass eine einstellbare, auf die Ausgangswelle wirkende Bremse (40) mit einer Positionierungsstelle (42) für den Schiebekeil vorgesehen ist.

FIG. 1

FIG. 2a

FIG. 2

FIG. 2b

FIG. 3b
(C-C)

FIG. 3a

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 563 246 (SCHLAFHORST) * Seite 3, Zeile 34 – Seite 4, Zeile 12; Seite 4, Zeile 19 – Seite 7, Zeile 17; Figuren 1,2,10-15. * --- | 1,9 | D 03 D 49/20 F 16 D 43/26 |
| A,D | US-A-3 837 368 (ROCKWELL) ----- | | |

**RECHERCHIERTE SACHGEBIETE (Int. Cl.4)**

D 03 D
F 16 D
D 03 C

Der vorliegende Recherchenbericht wurde für alle Patentansprüche erstellt

| Recherchenort | Abschlußdatum der Recherche | Prüfer |
|---|---|---|
| DEN HAAG | 12-08-1988 | BOUTELEGIER C.H.H. |

EPO FORM 1503 03.82 (P0403)